**Europäisches Patentamt**

**European Patent Office**

**Office européen des brevets**

(19)

(11) Veröffentlichungsnummer : **0 051 730
B1**

# EUROPÄISCHE PATENTSCHRIFT

(12)

(45) Veröffentlichungstag der Patentschrift :
04.07.84

(21) Anmeldenummer : 81107470.7

(22) Anmeldetag : 21.09.81

(51) Int. Cl.³ : **B 29 D   7/24**

(54) **Verfahren und Vorrichtung zur Herstellung von Platten, Folien, Bahnen, Bändern oder platten- bzw. folienähnlichen Formteilen.**

(30) Priorität : 24.10.80 DE 3040131

(43) Veröffentlichungstag der Anmeldung :
19.05.82 Patentblatt 82/20

(45) Bekanntmachung des Hinweises auf die Patenterteilung : 04.07.84 Patentblatt 84/27

(84) Benannte Vertragsstaaten :
AT BE CH DE FR GB IT LI LU NL SE

(56) Entgegenhaltungen :
AT-B-   222 346
DE-A- 2 022 313
DE-A- 2 856 580
DE-B- 1 084 021
DE-B- 2 534 302

(73) Patentinhaber : DEUTSCHE SOLVAY-WERKE GMBH
Langhansstrasse 6
D-5650 Solingen 11 (DE)

(72) Erfinder : Käufer, Helmut, Prof. Dr.
Florastrasse 64
D-4021 Metzkausen (DE)
Erfinder : Rautenberg, Lutz, Dipl.-Ing.
Pflügerstrasse 4
D-1000 Berlin 44 (DE)

(74) Vertreter : Seiler, Siegfried
DEUTSCHE SOLVAY WERKE
GmbH Langhansstrasse 6
D-5650 Solingen 11 (DE)

EP 0 051 730 B1

## Beschreibung

Die vorliegende Erfindung betrifft ein Verfahren zur Herstellung von Platten, Folien, Bahnen, Bändern, Profilen oder platten- bzw. folienähnlichen Formteilen von hoher mechanischer Festigkeit aus thermoplastischen Kunststoffen durch Druckverstrecken innerhalb des Walzenspaltes mehrerer Kalanderwalzenpaare unterhalb des Kristallitschmelzpunktes bzw. Erweichungspunktes des thermoplastischen Kunststoffes, wobei diese einem Fließwalzprozeß unterworfen werden.

Aus der AT-B 222 346 ist ein Verfahren zur Verbesserung der mechanischen Eigenschaften von Filmen, Bändern oder dgl. aus linearen, kristallisierbaren α-Olefinpolymeren mit hohem Molgewicht bekannt. Hierbei werden die Filme, Bänder oder dgl. bei einer Temperatur von 80 bis 130 °C ein- oder ggf. mehrmalig durch Druckwalzen geführt, so daß ein Fließen des Polymers in Walzrichtung erzielt wird, ohne daß Angaben über die einzuhaltenden Linienlasten noch über das einzuhaltende Zeitintervall zwischen dem ersten und dem zweiten Walzvorgang gemacht werden. Der Walzvorgang findet vorzugsweise in zwei zueinander senkrechten Richtungen statt und die Temperatur der Walzen des zweiten Kalanders liegt vorzugsweise höher als die der ersten Kalanderwalzen.

Ziel und Aufgabe der vorliegenden Erfindung war es, die mechanischen Eigenschaften der Platten, Folien, Bahnen, Bänder, Profile oder platten- bzw. folienähnlichen Formteile, insbesondere hinsichtlich ihrer Schlagzugzähigkeit, sowie das Verfahren zur Herstellung derselben so zu verbessern, daß hierbei der Durchlauf der vorgefertigten Formteile durch die Druckwalzenpaare nur in einer Richtung erforderlich ist.

Im Rahmen der Erfindung wurden zunächst zahlreiche Versuche zur Herstellung der Platten, Folien, Bahnen, Profile und Bänder durch Druckverstreckung durchgeführt unter Verwendung eines Kompressionswalzenpaares sowie eines oder mehrerer danach angeordneter Walzenpaare zur weiteren Druckverstreckung bzw. Druckbehandlung, wobei zunächst unterschiedliche Ergebnisse erhalten wurden. Waren die nach dem Kompressionswalzenpaar angeordneten, zur weiteren Druckverstreckung bzw. Druckbehandlung bestimmten Walzen auf einen höheren Temperaturbereich eingestellt als das erste zur Druckverstreckung eingesetzte Kompressionswalzenpaar, so wies der überwiegende Teil der druckverstreckten Platten eine etwas verschlechterte mechanische Eigenschaft gegenüber der Platte auf, die aus dem gleichen Material und unter den sonst gleichen Bedingungen nur einer Druckverstreckung durch das erste Kompressionswalzenpaar unterworfen wurde.

Weiterhin wurde festgestellt, daß gerade im Zusammenhang mit der Verwendung mehrerer Druckwalzenpaare sowohl das für die Druckverstreckung als auch das für die Drucknachbehandlung eingesetzte Kompressionswalzenpaar eine bestimmte Linienlast innerhalb eines bestimmten Bereiches auf die zur Druckverstreckung verwendeten Platten, Folien, Bänder, Profile und dgl. ausüben müssen. Weiterhin wurde festgestellt, daß eine weitere Druckverstreckung oder Drucknachbehandlung nicht so günstige Ergebnisse zeigte, wenn bestimmte Zeitintervalle nach der ersten Druckverstreckung zeitlich überschritten wurden.

Erfindungsgemäß wurde festgestellt, daß das Verfahren zur Herstellung von Platten, Folien, Bahnen, Bändern, Profilen oder platten- bzw. folienähnlichen Formteilen mit verbesserten mechanischen Eigenschaften aus thermoplastischen Kunststoffen durch Druckverstrecken der vorgefertigten Formteile innerhalb des Walzenspaltes mehrerer Kalanderwalzenpaare unterhalb des Kristallitschmelzpunktes bzw. Erweichungspunktes des thermoplastischen Kunststoffes, wobei diese einen Fließwalzprozeß unterworfen werden, dadurch verbessert wird, daß mindestens ein Kompressionswalzenpaar des zur Druckverstreckung eingesetzten Kompressionswalzenaggregates eine Linienlast von

100 N/cm bis 900 N/cm, vorzugsweise
150 N/cm bis 850 N/cm

auf vorgefertigte Platten, Folien, Bahnen, Bänder, Profile, platten- bzw. folienähnlichen Formteile oder auf aus dem Extruder kommende platten-, folien-, bahnen-, band- oder profilähnliche Vorformlinge im Walzenspalt des Kompressionswalzenpaares kurzzeitig ausübt und daß nach der ersten kurzzeitigen Druckverstreckung noch innerhalb der Regenerationszeit der Ermüdungserscheinung des druckbeaufschlagten Bereiches und/oder der Relaxationszeit der elastischen Rückstellung des druckbeaufschlagten Bereiches des Thermoplasten nach Ablauf eines Zeitintervalls zwischen

5 s und 5 min, vorzugsweise zwischen
20 s und 3 min,

die Platten, Folien, Bahnen, Bänder, Profile, platten- bzw. folienähnliche Formteile bzw. die druckverstreckten Vorformlinge einer oder mehreren weiteren kurzzeitigen Druckverstreckungen und/oder Drucknachbehandlungen im Walzenspalt eines oder mehrerer weiterer Kompressionswalzenpaare mit einer geringeren Linienlast von

75 N/cm bis 700 N/cm, vorzugsweise
80 N/cm bis 650 N/cm

unterworfen werden, wobei die Temperatur dieser Walzen oder Walzenpaare gleich oder kleiner ist wie bzw. als die Temperatur des ersten zur Druckverstreckung eingesetzten Kompressionswalzenaggregates, der Druck in Abhängigkeit vom Walzenspalt variiert wird und der Walzenspalt vorzugsweise den gleichen Abstand aufweist wie der des zur Druckverstreckung vorgeschalteten Kompressionswalzenpaares.

Bevorzugt wird die Temperatur dieser nach dem Kompressionswalzenpaar angeordneten Walzen oder Walzenpaare kleiner gehalten als die Temperatur des ersten zur Druckverstreckung eingesetzten Kalanders bzw. Kompressionsaggregates. Unter Regenerationszeit der Ermüdungserscheinung des druckbeaufschlagten Bereiches des Thermoplasten versteht man in diesem Zusammenhang die Zeit, die beispielsweise nach einer stärkeren Druckeinwirkung vergeht, bis sich der Kunststoff von der Ermüdung regeneriert hat. Diese Ermüdungserscheinung ist auch durch die verringerte elastische Rückstellung bemerkbar. Wird der Thermoplast mehreren stärkeren Druckeinwirkungen kurzfristig hintereinander unterworfen, ohne daß er Zeit hatte, eine gewisse Erholungsphase zu durchlaufen, so tritt ein Verspröden des Thermoplasten ein und der Stoff kann brechen (bzw. « totgewalzt » werden). Wird daher ein mehrmaliges Kompressionswalzen mit einer entsprechend höheren Linienlast kurzfristig hintereinander durchgeführt, ohne daß der Thermoplast eine gewisse Erholungsphase durchlaufen konnte, so besteht die Gefahr einer negativen Veränderung der mechanischen Eigenschaften des Materials, z. B. ein Verspröden, oder die Gefahr des Brechens der so behandelten Platte. Durchläuft dagegen andererseits der Stoff nach der Druckeinwirkung die gesamte Phase der Regeneration bzw. Rückstellung, und wird erst nachfolgend eine erneute Druckeinwirkung durchgeführt, so ergeben sich für diese, mit der erneuten Druckeinwirkung erzielten mechanischen Änderungen ähnliche Ergebnisse wie die, die bei der ersten Druckeinwirkung unter vergleichbaren Bedingungen vorlagen. Daraus folgt, daß die erneute Druckbeaufschlagung des jeweiligen Bereiches des Thermoplasten im Rahmen der vorliegenden Erfindung und der vorliegenden Verfahrensbedingungen innerhalb eines bestimmten Zeitintervalles erfolgen muß (5 s-5 min, vorzugsweise 20 s-3 min).

Unter Relaxationszeit oder Zeit der elastischen Rückstellung des Thermoplasten wird die Zeit verstanden, innerhalb der sich eine verminderte elastische Dämpfung der druckbeaufschlagten Stelle des aus dem Walzenspalt kommenden Thermoplasten ergibt. Die Zeit der elastischen bzw. spontanen elastischen Rückstellung (Relaxationszeit bzw. Regenerationszeit) ist u. a. von den Verarbeitungsbedingungen bzw. den Einwirkungsbedingungen (Walzentemperatur, gewählte Linienlast usw.) und von dem jeweiligen Thermoplasten abhängig (Die Relaxationszeit braucht je nach äußeren Bedingungen nicht identisch zu sein mit der Zeit der molekularen Relaxation).

Je höher die gewählte Walzentemperatur innerhalb des erfindungsgemäßen Verfahrens ist, umso länger erstreckt sich die Regenerations- bzw. Relaxationszeit. Je härter dagegen der Thermoplast ist oder je niedriger die gewählte Walzentemperatur liegt, umso schneller stellt sich die geringe elastische Dämpfung zurück.

Für das erfindunsgemäße Verfahren und die erfindungsgemäßen Verfahrensbedingungen ergeben sich Zeitintervalle für die Bearbeitungsbedingungen innerhalb der Regenerations- bzw. Relaxationszeiten, die zwischen 5 s und 5 min, vorzugsweise zwischen 20 s und 3 min, liegen.

Vergleicht man diese Zeiten, innerhalb der die druckbeaufschlagte Stelle von dem einen Walzenspalt zu dem anderen Walzenspalt gelangt und innerhalb der Relaxationszeit erneut einer Druckbeaufschlagung unterworfen wird, mit der Zeit, innerhalb der beispielsweise eine Folie von einem Walzenspalt zu dem anderen Walzenspalt eines üblichen Kalanders gelangt, so beträgt sie ein Mehrfaches. Ebenso sind auch viele der üblichen Kalander für das erfindungsgemäße Verfahren wegen der anzuwendenden sehr hohen Linienlast nicht geeignet.

Die weitere bzw. die weiteren auf die erste kurzzeitige Druckverstreckung innerhalb des Zeitintervalles der Relaxationszeit bzw. Regenerationszeit des Thermoplasten fallende(n) Druckverstreckung(en) und/oder Drucknachbehandlung(en) erfolgt in longitudinaler Richtung (Längsrichtung), um ein kontinuierliches Verfahren zu ermöglichen.

Bei dem erfindungsgemäßen Verfahren wird der Walzenspalt des ersten und mindestens eines weiteren Kompressionswalzenpaares in Abhängigkeit von der eingesetzten Materialdicke der Platten, Folien, Bahnen, Bänder oder platten- bzw. folienähnlichen Formteile derart eingestellt, daß der kürzeste Abstand der Walzen im Walzenspalt der zur Druckverstreckung eingesetzten Kompressionswalzenpaare 30 bis 90 %, vorzugsweise 50 bis 75 %, der Materialdicke (Ausgangsdicke) beträgt. Durch diesen Einstellbereich wird ein optimaler Verstreckungsgrad erreicht.

Weiterhin sollen die Umfangsgeschwindigkeiten der zur Druckverstreckung und/oder Drucknachbehandlung eingesetzten Walzen und Walzenpaare gleich sein, damit ein kontinuierliches Verfahren erreicht oder zusätzliche Streckungen vermieden werden. Jede Walze der zur Druckverstreckung eingesetzten Walzenpaare wird dabei direkt oder indirekt durch eine Bewegungsvorrichtung angetrieben. Die Walzentemperatur der zur Druckverstreckung eingesetzten Walzen liegt zwischen 30° und einer Temperatur (gemessen in °C), die mindestens 20 % niedriger ist als die Temperatur im Kristallitschmelzpunkt bzw. Erweichungspunkt des eingesetzten thermoplastischen Kunststoffes. Die Druckverstreckung der Platten, Folien, Bahnen, Bänder, Profile, platten- bzw. folienähnlichen Formteile oder Vorformlinge durch die hintereinander geschalteten oder in einem Abstand voneinander angebrachten Kompressionswalzenpaare (Druckwalzen) erfolgt so, daß ein Verstreckungsgrad zwischen 0,75 bis 0,50, erzielt wird, wobei als Verstreckungsgrad das Verhältnis der Materialdicke nach der Verstreckung zu der Materialdicke vor der Verstreckung definiert wird.

Nach einer bevorzugten Ausführungsform weisen die zur Druckverstreckung und/oder Drucknachbehandlung verwendeten Walzen und Walzenpaare den gleichen Walzendurchmesser und die gleiche Walzengeschwindigkeit auf.

Nach einer bevorzugten Ausführungsform ist bzw. sind die dem ersten Kompressionswalzenaggregat nachgeordnete(n), zur weiteren kurzzeitigen Druckverstreckung- und/oder Drucknachbehandlung benutzte(n) Kompressionswalze(n) auf eine Temperatur (gemessen in °C) eingestellt, die mindestens 5 %, vorzugsweise mindestens 10 % unterhalb der Temperatur (gemessen in °C) des ersten Kompressionswalzenpaares liegt.

Nach einer bevorzugten Ausführungsform werden die zur Druckverstreckung benutzten Platten, Folien, Bahnen, Bänder, Profile, platten- bzw. folienähnlichen Formteile oder Vorformlinge vor der ersten kurzzeitigen Druckverstreckung auf eine Temperatur gebracht, die zwischen 30 °C und einer Temperatur (gemessen in °C) liegt, die mindestens 30 % niedriger ist als die Temperatur im Kristallitschmelzpunkt bzw. Erweichungspunkt des eingesetzten Thermoplasten. Die Platten werden somit, falls sie im kalten Zustand vorliegen, vorgewärmt, oder falls sie aus der Fabrikation (beispielsweise als Vorformling aus dem Breitschlitzextruder) im heißen bzw. warmen Zustand kommen, auf diesen Bereich abgekühlt. Für Polyvinylchlorid und Vinylchlorid-Copolymerisate liegt der Bereich dieser Temperierung (Vorwärmung oder Abkühlung) zwischen 30 °C und 70 °C, vorzugsweise zwischen 40 °C und 60 °C. Für Polypropylen liegt der Temperierbereich zwischen 26 °C und 140 °C, vorzugsweise 30 °C und 135 °C. Die für das einzelne Polymerisat bzw. Copolymerisat zu wählenden Bereiche ergeben sich je nach dem Anteil des Copolymeren, der Menge der ggf. mitwerwendeten, Verarbeitungshilfsmittel (z. B. Weichmacher und dgl.), der Menge der evtl. mitverwendeten Zusatzstoffe oder Füllstoffe, z. B. Calciumcarbonat, Glasfasern und dgl.

Nach einer zweckmäßigen Ausführungsform werden zwei oder mehrere Walzenpaare zur Druckverstreckung eingesetzt (Druckwalzen), bei denen bei gleichem Walzenspalt sich die Liniensalt, die auf die Platten, Folien, Bahnen, Bänder, Profile, platten- bzw. folienählichen Formteile bzw. Vorformlinge ausgeübt wird, stufenweise erhöht und denen ein oder mehrere Drucknachbehandlungswalzen des Kompressionswalzenaggregates nachgeschaltet bzw. nachgeordnet sind, die in Abhängigkeit von dem gleichen eingestellten Walzenspalt des beim Durchgang zuletzt angeordneten, zur Druckverstreckung eingesetzten Kompressionswalzenpaares (Druckwalzen) eine geringere Linienlast auf die durchlaufenden, bereits druckbehandelten Platten, Folien, Bahnen, Bänder, Profile, platten- bzw. folienähnlichen Formteile oder auf die Vorformlinge ausübt bzw. ausüben.

Nach einer anderen vorzugsweisen Ausführungsform werden der Walzenspalt, die Walzengeschwindigkeit und die Walzentemperatur so eingestellt, daß auf der Oberfläche der zur Druckverstreckung eingeführten Platte, Folie, Bahn, des Profiles, des Bandes oder des Vorformlings eine oberflächliche Wellung oder rillenähnliche Profilierung, die auch den ganzen Querschnitt erfassen kann, nach dem Durchgang durch den Walzenspalt des bzw. der zur Druckverstrekung benutzten Kompressionswalzenpaare(s) erfolgt und daß durch mindestens ein nachgeordnetes, zur Drucknachbehandlung benutztes Walzenpaar (Drucknachbehandlungswalze) unter weitgehender Aufrechterhaltung der Molekularorientierung im thermoplastischen Formteil eine Drucknachbehandlung unter Oberflächenglättung durchgeführt wird.

Bei einer weiteren Ausführungsform wurde festgestellt, daß der Spalt des dem ersten Kompressionswalzenpaar nachgeordneten Kompressionswalzenpaares auch etwas kleiner gehalten werden kann, unter der Voraussetzung, daß das Produkt aus der Linienlast ($L_2$) (gemessen an dem zweiten Kompressionswalzenpaar) und der Spaltweite ($s_2$) kleiner ist als das Produkt aus der Linienlast ($L_1$) (gemessen bei Durchgang durch das erste Kompressionswalzenpaar) und der dort eingestellten Spaltweite ($s_1$).

Nach dem erfindungsgemäßen Verfahren können auch die aus dem Extruder, vorzugsweise aus dem Breitschlitzextruder, austretenden platten-, folien-, bahnen-, bänder- oder profilähnlichen Vorformlinge unter Einhaltung der angegebenen Temperaturbereiche, d. h. ggf. vorzugsweise unter Abkühlung auf die erfindungsgemäßen Temperaturbereiche, unmittelbar dem Kompressionswalzenaggregat zugeführt werden, so daß die Formgebung durch die Kompressionswalzen und nachgeschalteten Walzen, insbesondere auch durch die Drucknachbehandlungswalzen, erfolgt.

Die nach dem erfindungsgemäßen Verfahren hergestellten Platten, Folien, Bänder, Bahnen, Profile oder platten- bzw. folienählichen Formteile werden, falls eine andere Formgebung erwünscht ist, einer Umformung, vorzugsweise einem Tiefziehverfahren, unterworfen, wobei die dabei angewendeten Temperaturen unterhalb der innerhalb des erfindungsgemäßen Verfahrens verwendeten höchsten Kompressionswalzentemperatur liegen muß. Sollen diese Temperaturen überschritten werden, müssen zusätzliche Maßnahmen (druckaufnehmende Formen und dgl.) durchgeführt werden.

Für das erfindungsgemäße Verfahren können alle Thermoplasten, z. B. Polyvinylidenchlorid, Polyamid, Polyacetal, Polyvinylfluorid, Polyvinylidenfluorid, vorzugsweise jedoch Polyvinylchlorid, Polypropylen, Polyäthylen und deren Mischpolymerisate eingesetzt werden.

Die nach dem erfindungsgemäßen verfahren hergestellten Platten, Folien, Bänder, Bahnen, Profile und dgl. weisen verbesserte mechanische Eigenschafte, auf. So ergibt sich beispielsweise bei den nach dem erfindunsgemäßen Verfahren hergestellten Platten, Folien, Bändern, Bahnen, Profilen, platten- bzw.

folienähnlichen Formteilen eine erhöhte Streckspannung und eine Verbesserte Schlagzugzähigkeit, wobei diese Verbesserung der Schlagzugzähigkeit sowohl in Bahnrichtung als auch senkrecht bzw. quer zur Bahnrichtung festzustellen ist.

Die Streckspannung steigt bei den druckverstreckten Platten in Walzrichtung an. Bei einer longitudinalen, Kaskadenkompressionswalzenbehandlung bleibt sie quer zur Walzenrichtung annähernd gleich oder nimmt nur geringfügig ab, wobei sich dieses Verfahren von anderen monoaxialen Verstreckungsvorgängen unterscheidet, bei denen diese Eigenschaft quer zur Verstreckungsrichtung stärker abnimmt.

Weiterhin wurde festgestellt, daß die Dichte der nach dem erfindungsgemäßen Verfahren druckverstreckten Platten, Folien, Bänder, Bahnen, Profile und dgl. geringer werden kann als die des Ausgangsmaterials. Durch Röntgenweitwinkeluntersuchungen, Rasterelektronenmikroskopie, mikroskopische Aufnahmen und Dichtemessungen wurde festgestellt, daß offensichtlich eine stärkere Orientierung der Moleküle des Kunststoffes durch das erfindungsgemäße Verfahren stattgefunden hat.

Wie bereits ausgeführt, hängt das Eigenschaftsbild des Thermoplasten unter äußerer Last von seinem Regenerations- bzw. Relaxationsverhalten ab. Diese Fähigkeit der Moleküle, unter Last zu regenerieren oder zu relaxieren und damit Spannungen abzubauen, ist abhängig von der Temperatur, Belastungsgeschwindigkeit, Kettenaufbau, Linienlast usw. Die ablaufenden Regenerations- und/oder Relaxationsprozesse liegen bei den gewählten Verfahrensbedingungen in den Hauptketten der amorphen Phase. Die Umlagerung von Kettenteilen und die Orientierung kann auch zu einer Energieabgabe bzw. Wärmeergänzung führen. Erfolgt nun innerhalb des erfindungsgemäßen Zeitintervalles des Regenerations- und/oder Relaxationsprozesses (nach der ersten Druckbeaufschlagung im Walzenspalt) eine weitere Druckverstreckung unter Verwendung der erfindungsgemäßen Verfahrensbedingungen, so erfolgt ein « Aufschaukeln » des Regenerations- bzw. Relaxationsvorganges.

Dieser Vorgang des Aufschaukelns von Relaxationsvorgängen findet sein Ende, d. h. Bruch tritt ein, wenn die Relaxationsvorgänge abgelaufen sind und/oder die noch wirkende Energie die Festigkeit des relaxierten Materials übersteigt, oder wenn die Temperatur in die Nähe des Schmelzbereiches kommt und das Material dadurch seine Festigkeit einbüßt.

Wichtig ist jedoch, daß innerhalb des erfindungsgemäßen Verfahrens und der erfindungsgemäßen Verfahrensbedingungen ein Zeitintervall, innerhalb dessen die druckbeaufschlagte Stelle von einem Walzenspalt zu dem anderen gelangt, zwischen 5 s und 5 min, vorzugsweise zwischen 20 s und 3 min, eingehalten wird.

Die Erfindung betrifft weiterhin eine Vorrichtung zur Durchführung des erfindungsgemäßen Verfahrens, bestehend aus einem Kompressionswalzenaggregat mit mehreren Walzenpaaren, von denen mindestens ein Walzenpaar unter Mitverwendung mechanischer, hydraulischer, elektrischer und/oder elektromagnetischer Zusatzvorrichtungen als Druckwalzenpaar (Kompressionswalzenpaar), und mindestens ein weiteres Walzenpaar unter Mitverwendung mechanischer, hydraulischer, elektrischer und/oder elektromagnetischer Zusatzvorrichtung als Druckwalzenpaar (Kompressionswalzenpaar) und/oder Drucknachbehandlungswalzenpaar ausgebildet ist, wobei jede Walze der zur Druckverstreckung und zur Drucknachbehandlung eingesetzten Walzenpaare direkt oder indirekt durch eine Bewegungsvorrichtung antreibbar ist. Erfindungsgemäß weist jede Walze den gleichen Walzendurchmesser auf, mindestens ein Walzenpaar des zur Druckverstreckung eingesetzten Kompressionswalzenaggregates ist durch die mitverwendeten mechanischen, hydraulischen, elektrischen und/oder elektromagnetischen Zuzatzvorrichtungen so konstruiert und angeordnet, daß es eine Linienlast von 100 N/cm bis 900 N/cm, vorzugsweise 150 N/cm bis 850 N/cm und mindestens ein Walzenpaar des zur Drucknachbehandlung eingesetzten Walzenpaares eine Linienlast von 75 N/cm bis 700 N/cm, vorzugsweise 80 N/cm bis 650 N/cm auf die Platten, Folien, Bahnen, Bänder oder platten- bzw. folienähnlichen Formteile oder Vorformlinge ausübt, wobei die Walzentemperatur des zweiten, dritten oder n-ten zur Druckverstreckung und/oder Drucknachbehandlung eingesetzten Walzenpaares gleich oder kleiner ist als die Temperatur des ersten zur Druckverstreckung eingesetzten Druckwalzenpaares (Kompressionswalzenpaares).

Nach einer bevorzugten Ausführungsform ist vor dem ersten Kompressionswalzenpaar eine Temperiervorrichtung zum Erwärmen oder — im Fall bereits erwärmter Formteile — zum Abkühlen der Platten, Folien, Bahnen, Bänder oder platten- bzw. folienähnlichen Formteile oder Vorformlinge angeordnet, wobei die Temperiervorrichtung auf einen Temperaturbereich eingestellt ist, der zwischen 30 °C und einer Temperatur (gemessen in °C) liegt, die mindestens 30% niedriger ist als die Temperatur im Kristallitschmelzpunkt bzw. Erweichungspunkt des eingesetzten Thermoplasten.

Nach dem erfindungsgemäßen Verfahren und mit Hilfe der erfindungsgemäßen Vorrichtung werden bevorzugt Platten, Folien, Bahnen, Bänder, platten- bzw. folienähnliche Formteile oder Vorformlinge mit einer Ausgangsdicke von mehr als 2 mm, vorzugsweise mehr als 2,5 mm, der Druckverstreckung unterworfen.

Beispiele

Beispiel 1

Eine extrudierte Platte mit einer Ausgangsdicke von 2,18 mm, bestehend aus einem Propylen-

5

Äthylen-Copolymerisat mit einem Äthylengehalt von ca. 3 %, wurde auf 80° in einer Temperiervorrichtung vorerwärmt und durch ein Kompressionswalzenpaar des zur Druckverstreckung eingesetzten Kompressionswalzenaggregates innerhalb der Druckverstreckung einem Fließwalzprozeß unterworfen. Das Kompressionswalzenpaar des zur Druckverstreckung eingesetzten Kompressionswalzenaggregates hatte eine Temperatur von 80 °C und übte eine Linienlast von 800 N/cm auf die Platte aus. Die Spaltweite des Kompressionswalzenpaares wurde vorher auf 0,8 mm eingestellt. Die Walzenpaare des zur Druckverstreckung eingesetzten Kompressionswalzenaggregates hatten einen Durchmesser von 25 cm, wobei beide Walzen den gleichen Walzendurchmesser aufwiesen. Die Walzen wurden durch eine Bewungsvorrichtung angetrieben, wobei die gleiche Walzengeschwindigkeit (1 m/min) eingestellt wurde.

Kurzfristig nach der ersten Druckverstreckung wurde die Platte innerhalb von 30 s, d. h. innerhalb des Zeitintervalles der Regenerations- bzw. Relaxationszeit, in longitudinaler Richtung einer weiteren Druckverstreckung im Walzenspalt eines nachgeschalteten Kompressionswalzenpaares unterworfen. Die Temperatur dieser Walzen war auf 70 °C eingestellt. Die Spaltbreite wurde auf 0,8 mm vorgestellt. Bei dieser nachfolgenden Druckverstreckung übten die Kompressionswalzenpaare eine Linienlast von 600 N/cm auf die Platte kurzzeitig aus. Diese nachgeschalteten Kompressionswalzenpaare hatten ebenfalls den gleichen Durchmesser und die gleiche Walzengeschwindigkeit wie das erste Kompressionswalzenpaar. Die Dickenreduzierung erfolgte nach der ersten kurzzeitigen Druckverstreckung von 2,18 mm auf 1,29 mm nach dem Durchlauf durch den ersten Spalt des Kompressionswalzenaggregates. Nach dem Durchlauf durch den zweiten Spalt erfolgte eine Dickenreduzierung auf 0,83 mm.

| Mechanische Eigenschaften | Ausgangs-material | 1. Spalt | 2. Spalt |
|---|---|---|---|
| Streckspannung σ s | | | |
| in Bahnrichtung N/mm² | 20 | 26 | 58 |
| quer z. Bahnrichtung N/mm² | 21 | 21 | 18 |
| Schlagzugzähigkeit | | | |
| α zn (nach DIN 53 448) | | | |
| in Bahnrichtung N mm/mm² | 123 | 1 570 | 1 642 |
| quer z. Bahnrichtung N mm/mm² | 90 | 320 | 570 |

## Beispiel 2

Eine estrudierte Platte mit einer Ausgangsdicke von 2,18 mm, bestehend aus einem Propylenhomopolymerisat, wurde auf 70 °C in einer Temperiervorrichtung vorerwärmt und durch ein Kompressionswalzenpaar des zur Druckverstreckung eingesetzten Kalanders bzw. Kompressionswalzenaggregates innerhalb der Druckverstreckung einem Fließwalzprozeß unterworfen. Das Kompressionswalzenpaar des zur Druckverstreckung eingesetzten Kompressionswalzenaggregates übte dabei eine Linienlast von 800 N/cm auf die Platte aus. Die Temperatur dieser ersten Kompressionswalze betrug 80 °C. Die Spaltweite des Kompressionswalzenpaares wurde vorher auf 1 mm eingestellt. Die Walzenpaare des zur Druckverstreckung eingesetzten Kompressionswalzenaggregates hatten einen Durchmesser von 25 cm, wobei beide Walzen die gleichen Walzendurchmesser aufwiesen. Die Walzen wurden durch eine Bewegungsvorrichtung angetrieben, wobei die gleiche Walzengeschwindigkeit (1 m/min) eingestellt wurde.

Kurzfristig nach der ersten Druckverstreckung wurde die Platte innerhalb von 29 s, d. h. innerhalb des Zeitintervalles der Regenerations- bzw. Relaxationszeit, in longitudinaler Richtung einer weiteren Druckverstreckung im Walzenspalt eines nachgeschalteten Kompressionswalzenpaares unterworfen. Die Temperatur dieser Walzen war auf 75 °C eingestellt. Die Spaltbreite wurde auf 1 mm vorgestellt. Bei dieser nachfolgenden Druckverstreckung übten die Kompressionswalzenpaare eine Linienlast von 600 N/cm auf die Platte kurzzeitig aus. Diese nachgeschalteten Kompressionswalzenpaare hatten ebenfalls den gleichen Durchmesser und die gleiche Walzengeschwindigkeit wie das erste Kompressionswalzenpaar. Die Dickenreduzierung erfolgte nach der ersten kurzzeitigen Druckverstreckung von 2,18 mm auf 1,25 mm nach dem Durchlauf durch den ersten Spalt des Kompressionswalzenaggregates. Nach dem Durchlauf durch den zweiten Spalt erfolgte eine Dickenreduzierung auf 1,03 mm.

| Mechanische Eigenschaften | Ausgangs-material | 1. Spalt | 2. Spalt |
|---|---|---|---|
| Streckspannung σ s | | | |
| in Bahnrichtung N/mm² | 34,5 | 40 | 53 |
| quer z. Bahnrichtung N/mm² | 34,5 | 30 | 23 |
| Schlagzugzähigkeit α zn | | | |
| in Bahnrichtung N mm/mm² | 102 | 1 175 | 1 463 |
| quer z. Bahnrichtung N mm/mm² | 85 | 144 | 191 |

## Beispiel 3

Eine extrudierte Platte mit einer Ausgangsdicke von 2,10 mm, bestehend aus einem Polyvinylchlorid, wurde auf 60 °C in einer Temperiervorrichtung vorerwärmt und durch ein Kompressionswalzenpaar des zur Druckverstreckung eingesetzten Kalanders bzw. Kompressionswalzenaggregates innerhalb der Druckverstreckung einem Fließwalzprozeß unterworfen. Das Kompressionswalzenpaar des zur Druckverstreckung eingesetzten Kompressionswalzenaggregates übte dabei eine Linienlast von 600 N/cm auf die Platte aus. Die Walzentemperatur betrug 60 °C. Die Spaltweite des Kompressionswalzenpaares wurde vorher auf 1 mm eingestellt. Die Walzenpaare des zur Druckverstreckung eingesetzten Kompressionswalzenaggregates hatten einen Durchmesser von 25 cm, wobei beide Walzen den gleichen Walzendurchmesser aufwiesen. Die Walzen wurden durch eine Bewegungsvorrichtung angetrieben, wobei die gleiche Walzengeschwindigkeit eingestellt wurde (1 m/min).

Kurzfristig nach der ersten Druckverstreckung wurde die Platte innerhalb der Regenerations- bzw. Relaxationszeit der elastischen Rückstellung des Thermoplasten (im vorliegenden Fall innerhalb von 31 s) in longitudinaler Richtung einer weiteren Druckverstreckung im Walzenspalt eines nachgeschalteten Kompressionswalzenpaares unterworfen. Die Temperatur dieser Walzen war auf 50 °C eingestellt. Die Spaltbreite wurde auf 1 mm vorgestellt. Bei dieser nachfolgenden Druckverstreckung übten die Kompressionswalzenpaare eine Linienlast von 450 N/cm auf die Platte kurzzeitig aus. Diese nachgeschalteten Kompressionswalzenpaare hatten ebenfalls den gleichen Durchmesser und die gleiche Walzengeschwindgkeit wie das erste Kompressionswalzenpaar. Die Dickenreduzierung erfolgte nach der ersten kurzzeitigen Druckverstreckung von 2,10 mm auf 1,35 mm nach dem Durchlauf durch den ersten Spalt des Kompressionswalzenaggregates. Nach dem Durchlauf durch den zweiten Spalt erfolgte eine Dickenreduzierung auf 1,24 mm.

| Mechanische Eigenschaften | Ausgangs-material | 1. Spalt | 2. Spalt |
|---|---|---|---|
| Streckspannung $\sigma$ s | | | |
| in Bahnrichtung N/mm² | 53 | 61 | 63 |
| quer z. Bahnrichtung N/mm² | 52 | 48 | 47 |
| Schlagzugzähigkeit $\alpha$ zn | | | |
| in Bahnrichtung N mm/mm² | 640 | 1 644 | 2 000 |
| quer z. Bahnrichtung N mm/mm² | 630 | 535 | 547 |

### Ansprüche

1. Verfahren zur Herstellung von Platten, Folien, Bahnen, Bändern, Profilen oder platten- bzw. folienähnlichen Formteilen von hoher mechanischer Festigkeit aus thermoplastischen Kunststoffen durch Druckverstrecken innerhalb des Walzenspaltes mehrerer Druckwalzenpaare unterhalb des Kristallitschmelzpunktes bzw. Erweichungspunktes des thermoplastichen Kunststoffes, dadurch gekennzeichnet, daß mindestens ein Kompressionswalzenpaar des zur Druckverstreckung eingesetzten Kompressionswalzenaggregates eine Linienlast von

100 N/cm bis 900 N/cm, vorzugsweise
150 N/cm bis 850 N/cm

auf vorgefertigte Platten, Folien, Bahnen, Bänder, Profile, platten- bzw. folienähnlichen Formteile oder auf aus dem Extruder kommende platten-, folien-, bahnen-, band- oder profilähnliche Vorformlinge im Walzenspalt des Kompressionswalzenpaares kurzzeitig ausübt und daß nach der ersten kurzzeitigen Druckverstreckung noch innerhalb der Regenerationszeit der Ermüdungserscheinung des druckbeaufschlagten Bereiches und/oder der Relaxationszeit der elastischen Rückstellung des druckbeaufschlagten Bereiches des Thermoplasten nach Ablauf eines Zeitintervalls zwischen

5 s und 5 min, vorzugsweise zwischen
20 s und 3 min,

die Platten, Folien, Bahnen, Bänder, Profile, platten- bzw. folienähnlichen Formteile bzw. die druckverstreckten Vorformlinge einer oder mehreren weiteren kurzzeitigen Druckverstreckungen und/oder Drucknachbehandlungen im Walzenspalt eines oder mehrerer weiterer Kompressionswalzenpaare mit einer geringeren Linienlast von

75 N/cm bis 700 N/cm, vorzugsweise
80 N/cm bis 650 N/cm

unterworfen werden, wobei die Temperatur dieser Walzen oder Walzenpaare gleich oder kleiner ist wie bzw. als die Temperatur des ersten zur Druckverstreckung eingesetzten Kompressionswalzenaggregates, der Druck in Abhängigkeit vom Walzenspalt variiert wird und der Walzenspalt vorzugsweise den gleichen Abstand aufweist wie der des zur Druckverstreckung vorgeschalteten Kompressionswalzenpaares.

2. Verfahren nach Anspruch 1, dadurch gekennzeichnet, daß die Walzentemperatur der zur Druckverstreckung eingesetzten Walzen zwischen 30° und einer Temperatur (gemessen in °C) liegt, die mindestens 20 % niedriger ist als die Temperatur im Kristallitschmelzpunkt bzw. Erweichungspunkt des eingesetzten thermoplastischen Kunststoffes.

3. Verfahren nach Ansprüchen 1 und 2, dadurch gekennzeichnet, daß die Druckverstreckung der Platten, Folien, Bahnen, Bänder, Profile, platten- bzw. folienähnlichen Formteile oder der Vorformlinge durch die hintereinandergeschalteten oder in einem Abstand voneinander angebrachten Kompressionswalzenpaare so erfolgt, daß ein Verstreckungsgrad zwischen

0,75 bis 0,50

erzielt wird, wobei als Verstreckungsgrad das Verhältnis der Materialdicke nach der Verstreckung zu der Materialdicke vor der Verstreckung definiert wird.

4. Verfahren nach Ansprüchen 1 bis 3, dadurch gekennzeichnet, daß die zur Druckverstreckung benutzten Platten, Folien, Bahnen, Bänder, Profile, platten- bzw. folienähnlichen Formteile oder Vorformlinge vor der ersten kurzzeitigen Druckverstreckung auf eine Temperatur gebracht werden, die zwischen 30 °C und einer Temperatur (gemessen in °C) liegt, die mindestens 30 % niedriger ist als die Temperatur im Kristallitschmelzpunkt bzw. Erweichungspunkt des eingesetzten Thermoplasten.

5. Verfahren nach Ansprüchen 1 bis 4, dadurch gekennzeichnet, daß die dem ersten Kompressionswalzenpaar nachgeordneten, zur weiteren kurzzeitigen Druckverstreckung und/oder Drucknachbehandlung benutzten Kompressionswalzen oder Kompressionswalzenpaare auf eine Temperatur (gemessen in °C) eingestellt ist bzw. sind, die mindestens 5 %, vorzugsweise mindestens 10 % unterhalb der Temperatur des ersten Kompressionswalzenpaares liegt.

6. Verfahren nach Ansprüchen 1 bis 5, dadurch gekennzeichnet, daß die Umfangsgeschwindigkeiten der zur Druckverstreckung und/oder Drucknachbehandlung eingesetzten Walzen der Walzenpaare gleich sind.

7. Verfahren nach einem der Ansprüche 1 bis 6, dadurch gekennzeichnet, daß zwei oder mehrere Kompressionswalzenpaare zur Druckverstreckung eingesetzt werden, bei denen bei gleichem Walzenspalt die Linienlast, die auf die Platten, Folien, Bahnen, Bänder, Profile, platten- bzw. folienähnlichen Formteile oder Vorformlinge ausgeübt wird, sich stufenweise erhöht und diesen ein oder mehrere Drucknachbehandlungswalzen des Kompressionswalzenaggregates nachgeschaltet bzw. nachgeordnet sind, die in Abhängigkeit von dem gleichen eingestellten Walzenspalt des beim Durchgang zuletzt angeordneten, zur Druckverstreckung eingesetzten Kompressionswalzenpaares (Druckwalzen) eine geringere Linienlast auf die durchlaufenden, bereits druckbehandelten Platten, Folien, Bahnen, Bänder, platten- bzw. folienähnlichen Formteile oder Vorformlinge ausübt bzw. ausüben.

8. Verfahren nach einem der Ansprüche 1 bis 7, dadurch gekennzeichnet, daß der Walzenspalt, die Walzengeschwindigkeit und die Walzentemperatur so eingestellt werden, daß auf der Oberfläche der zur Druckverstreckung eingeführten Platte, Folie, Bahn, des Profiles, des Bandes oder des Vorformlings eine oberflächliche Wellung oder rillenähnliche Profilierung, die auch den ganzen Querschnitt erfassen kann, nach dem Durchgang durch den Walzenspalt des bzw. der zur Druckverstreckung benutzten Kompressionswalzenpaare(s) erfolgt und daß durch mindestens ein nachgeordnetes, zur Drucknachbehandlung benutztes Walzenpaare (Drucknachbehandlungswalzen) unter weitgehender Aufrechterhaltung der Molekularorientierung im thermoplastischen Formteil eine Drucknachbehandlung unter Oberflächenglättung, Riffelung und/oder Prägung durchgeführt wird.

9. Verfahren nach einem der Ansprüche 1 bis 8, dadurch gekennzeichnet, daß die Dicke des zur Druckverstreckung benutzten Platte, Folie, Bahn, des Bandes, platten- bzw. folienähnlichen Formteiles oder Vorformlinges vor der Druckverstreckung

mehr als 2 mm, vorzugsweise
mehr als 2,5 mm,

beträgt.

10. Verfahren nach Ansprüchen 1 bis 9, dadurch gekennzeichnet, daß die zur Druckverstreckung und/oder Drucknachbehandlung verwendeten Walzen und Walzenpaare den gleichen Walzendurchmesser und die gleiche Walzengeschwindigkeit aufweisen.

11. Vorrichtung zur Durchführung des Verfahrens nach einem der Ansprüche 1 bis 10, bestehend aus einem Kompressionswalzenaggregat mit mehreren Walzenpaaren, von denen mindestens ein Walzenpaar unter Mitverwendung mechanischer, hydraulischer, elektrischer und/oder elektromagnetischer Zusatzvorrichtungen als Druckwalzenpaar (Kompressionswalzenpaar) und mindestens ein weiteres Walzenpaar unter Mitverwendung mechanischer, hydraulischer, elektrischer und/oder elektromagnetischer Zusatzvorrichtungen als Druckwalzenpaar (Kompressions walzenpaar) und/oder Drucknachbehandlungswalzenpaar ausgebildet ist,wobei jede Walze der zur Druckverstreckung und zur Drucknachbehandlung eingesetzten Walzenpaare direkt oder indirekt durch eine Bewegungsvorrichtung antreibbar ist, dadurch gekennseichnet, daß jede Walze den gleichen Walzendurchmesser aufweist, daß mindestens ein Walzenpaar des zur Druckverstreckung eingesetzten Kompressionswalzenaggregates durch die mitverwendeten mechanischen, hydraulischen, elektrischen und/oder elektromagnetischen Zusatzvorrichtungen eine Linienlast von

100 N/cm bis 900 N/cm, vorzugsweise
150 N/cm bis 850 N/cm,

und mindestens ein Walzenpaar des zur Drucknachbehandlung eingesetzten Walzenpaares eine Linienlast von

75 N/cm bis 700 N/cm, vorzugsweise
80 N/cm bis 650 N/cm,

auf die Platten, Folien, Bahnen, Bänder oder platten- bzw. folienähnlichen Formteile oder Vorformlinge ausübt, wobei die Walzentemperatur des zweiten, dritten oder n-ten zur Druckverstreckung und/oder Drucknachbehandlung eingesetzten Walzenpaares gleich oder kleiner ist wie bzw. als die Temperatur des ersten zur Druckverstrekkung eingesetzten Druckwalzenpaares (Kompressionswalzenpaares).

12. Vorrichtung nach Anspruch 11, dadurch gekennzeichnet, daß vor dem ersten Kompressionswalzenpaar eine Temperiervorrichtung zum Erwärmen oder — im Fall bereits erwärmter Formteile — zum Abkühlen der Platten, Folien, Bahnen, Bänder oder platten- bzw. folienähnlichen Formteile oder Vorformlinge angeordnet ist, wobei die Temperiervorrichtung auf einen Temperaturbereich eingestellt ist, der zwischen 30 °C und einer Temperatur (gemessen in °C) liegt, die mindestens 30 % niedriger ist als die Temperatur im Kristallitschmelzpunkt bzw. Erweichungspunkt des eingesetzten Thermoplasten.

## Claims

1. Method for the production of plates, films, sheets, strips, sections or shaped parts similar to plates or films, of high mechanical strength from thermoplastic synthetic materials by stretching under pressure within the roll gap of a plurality of pairs of pressure rollers below the crystallite melting point or softening point of the thermoplastic synthetic material, characterized in that at least one pair of compression rollers of the set of compression rollers used for the stretching under pressure briefly exerts a linear load of

100 N/cm to 900 N/cm, preferably
150 N/cm to 850 N/cm

on prefabricated plates, films, sheets, strips, sections, shaped parts similar to plates or films or onto preformed articles, similar to plastes, films, sheets, strips or sections, coming out of the extruder, in the roll gap of the pair of compression rollers and that after the first brief stretching under pressure still within the regeneration period of the manifestation of fatigue of the area on which pressure is applied and/or the period of relaxation of the elastic recovery of the region of the thermoplastic material on which pressure has been applied, after a time interval has elapsed, between

5 s and 5 min, preferably between
20 s and 3 min,

the plates, films, sheets, strips, sections, shaped parts similar to plates or films or the preformed articles which have been stretched under pressure are subjected to one or more further brief stretching operations under pressure and/or compressive after-treatments in the roll gap of one or more additional pairs of compression rollers with a smaller linear load of

75 N/cm to 700 N/cm, preferably
80 N/cm to 650 N/cm

in which the temperature of these rollers or pairs of rollers is equal to or less than the temperature of the first set of compression rollers used for stretching under pressure, the pressure is varied as a function of the roll gap and the roll gap preferably has the same clearance as that of the pair of compression rollers connected in series for stretching under pressure.

2. Method according to Claim 1, characterized in that the rolling temperature of the rollers used for stretching under pressure lies between 30° and a temperature (measured in °C), which is at least 20 % lower than the temperature at the crystallite melting point or softening point of the thermoplastic synthetic material used.

3. Method according to Claims 1 and 2, characterized in that the stretching of the plates, films, sheets, strips, sections, shaped parts similar to plates or films or of the preformed articles, under pressure by the pairs of compression rollers connected in series or spaced a distance from each other takes place such that a degree of stretching of

0.75 to 0.50

is obtained, in which the degree of stretching is defined by the ratio of the thickness of the material after stretching to the thickness of the material before stretching.

4. Method according to Claims 1 to 3, characterized in that the plates, films, sheets, strips, sections, shaped parts similar to plates or films or preformed articles, used for stretching under pressure are, before the first brief stretching under pressure, brought to a temperature which lies between 30 °C and a temperature (measured in °C) which is at least 30 % lower than the temperature at the crystallite melting point or softening point of the thermoplastic material used.

5. Method according to Claims 1 to 4, characterized in that the compression rollers or pairs of compression rollers, which are arranged after the first pair of compression rollers and which are used for the further brief stretching under pressure and/or compressive after-treatment, is or are set to a temperature (measured in °C), which lies at least 5 %, preferably at least 10 % below the temperature of the first pair of compression rollers.

6. Method according to Claims 1 to 5, characterized in that the circumferential speeds of the rollers or pairs of rollers used for the stretching under pressure and/or compressive after-treatment are equal.

7. Method according to one of Claims 1 to 6, characterized in that two or more pairs of compression rollers are used for stretching under pressure in which with the same roll gap the linear load which is exerted onto the plates, films, sheets, strips, sections, shaped parts similar to plates or films, or preformed articles, in increased stepwise and that one or more compressive after-treatment rollers of the set of compression rollers are connected or arranged thereafter, which as a function of the same set roll gap of the last pair of compression rollers (pressure rollers) to be passed through, and which are used for stretching under pressure, exert a smaller linear load onto the plates, films, sheets, strips, shaped parts similar to plates or films, or preformed articles, which pass through and which have already received compressive treatment.

8. Method according to one of Claims 1 to 7, characterized in that the roll gap, the rolling speed and the rolling temperature are set such that on the surface of the plate, film, sheet, section, strip or pre-formed article introduced for stretching under pressure, a superficial undulation of groove-like profiling, which may also take up the entire cross-section, occurs after passing through the roll gap of the pair or pairs of compression rollers used for stretching under pressure and that a compressive after-treatment with smooth surface finishing, grooving and/or stamping is carried out by at least one pair of rollers (compressive after-treatment rollers) arranged thereafter and used for compressive after-treatment, largely maintaining the molecular orientation in the thermoplastic shaped part.

9. Method accordance to one of Claims 1 to 8, characterized in that the thickness of the plate, film, sheet, strip, shaped part similar to a plate or film, or pre-formed article used for stretching under pressure is

more than 2 mmn, preferably
more than 2.5 mm

before the stretching under pressure.

10. Method according to Claims 1 to 9, characterized in that the rollers and pairs of rollers used for the stretching under pressure and/or compressive after-treatment have the same roll diameter and the same rolling speed.

11. Apparatus for carrying out the method according to one of Claims 1 to 10, consisting of a set of compression rollers with several pairs of rollers, of which at least one pair of rollers is constructed as a pair of pressure rollers (pair of compression rollers) with the additional use of mechanical, hydraulic, electric and/or electromagnetic auxiliary devices, and at least one further pair of rollers is constructed as a pair of pressure rollers (pair of compression rollers) and/or a pair of compressive after-treatment rollers with the additional use of mechanical, hydraulic, electric and/or electromagnetic auxiliary devices, in which each roller of the pairs of rollers used for the stretching under pressure and for the compressive after-treatment, is able to be driven directly or indirectly by an operating mechanism, characterized in that each roller has the same roll diameter, that at least one pair of rollers of the set of compression rollers used for stretching under pressure exerts a line load of

100 N/cm to 900 N/cm, preferably
80 N/cm to 850 N/cm

**0 051 730**

through the mechanical, hydraulic, electric and/or electromagnetic auxiliary devices which are used in addition, and at least one pair of rollers of the pair of rollers used for the compressive after-treatment exerts a line load of

75 N/cm to 700 N/cm, preferably
80 N/cm to 650 N/cm,

on the plates, films, sheets, strips or shaped parts similar to plates or films, or pre-formed articles, in which the rolling temperature of the second, third or nth pair of rollers used for stretching under pressure and/or compressive after-treatment is equal to or lower than the temperature of the first pair of pressure rollers (pair of compression rollers) used for stretching under pressure.

12. Apparatus according to Claim 11, characterized in that before the first pair of compression rollers a tempering device is arranged to heat — or, in the case of shaped parts which have already been heated — to cool down the plates, films, sheets, strips or shaped parts similar to plates or films, or pre-formed articles, in which the tempering device is set to a temperature range which lies between 30 °C and a temperature (measure in °C), which is at least 30 % lower than the temperature at the crystallite melting point of the solftening point of the thermoplastic material used.

**Revendications**

1. Procédé pour fabriquer des plaques, des feuilles, des bandes, des rubans, des profilés ou des produits formés analogues à des plaques ou à des feuilles en matières thermoplastiques, présentant une .résistance mécanique élevée, par étirage sous compression dans l'entrefer de plusieurs paires de cylindres de compression au-dessous du point de fusion des cristallites ou du point de ramollissement de la matière thermoplastique, caractérisé en ce qu'au moins une paire de cylindres de compression du groupe de cylindres de compression mis en œuvre pour l'étirage sous compression exerce, dans l'entrefer de la paire de cylindres de compression, sur les plaques, les feuilles, les bandes, les rubans, les profilés ou les produits formés analogues à des plaques ou à des feuilles, tous produits préparés au préalable, ou sur les préformes en plaques, feuilles, bandes, rubans ou profilés sortant de la boudineuse, une charge linéaire de courte durée de

100 N/cm à 900 N/cm, de préférence de
150 N/cm à 850 N/cm,

et en ce que, après le premier étirage sous compression de courte durée, toujours au-dedans du temps de régénération après fatigue de la zone soumise à la compression et/ou du temps de relaxation de la récupération élastique de la zone du thermoplaste soumise à la compression, après un intervalle de temps compris entre

5 s et 5 min, de préférence entre
20 s et 3 min,

les plaques, les feuilles, les bandes, les rubans, les profilés ou les produits formés analogues à des plaques ou à des feuilles, ou encore les préformes étirées sous compression sont soumis à un ou plusieurs étirages sous compression et/ou post-traitements sous compression supplémentaires de courte durée dans l'entrefer d'une ou plusieurs paires de cylindres de compression supplémentaires sous une charge linéaire plus faible comprise entre

75 N/cm et 700 N/cm, de préférence entre
80 N/cm et 650 N/cm,.

la température de ces cylindres ou paires de cylindres étant égale ou inférieure à la température du premier groupe de cylindres de compression utilisé pour l'étirage sous compression, la pression variant en fonction de l'entrefer des cylindres et cet entrefer étant de préférence le même que celui de la paire de cylindres de compression disposée en amont en vue de réaliser l'étirage sous compression.

2. Procédé suivant la revendication 1 caractérisé en ce que la température des cylindres destinés à l'étirage sous compression est comprise entre 30 °C et une température (mesurée en °C) d'au moins 20 % plus basse que la température au point de fusion des cristallites ou au point de ramollissement de la matière thermoplastique mise en œuvre.

3. Procédé suivant les revendications 1 et 2 caractérisé en ce que l'étirage sous compression des plaques, feuilles, bandes, rubans, profilés ou analogues ou des préformes par les paires de cylindres de compression disposées l'une derrière l'autre ou à distance l'une de l'autre s'effectue de telle manière que l'on obtienne un degré d'étirage compris entre

0,75 et 0,50,

le degré d'étirage désignant ici le rapport entre l'épaisseur de matériau après l'étirage et l'épaisseur de matériau avant l'étirage.

4. Procédé suivant les revendications 1 à 3 caractérisé en ce que les plaques, feuilles, bandes, rubans, profilés ou analogues ou les préformes sont portés, avant le premier étirage sous compression de courte durée, à une température comprise entre 30 °C et une température (mesurée en °C) d'au moins 30 % plus basse que la température au point de fusion des cristallites ou au point de ramollissement du thermoplaste mis en œuvre.

5. Procédé suivant les revendications 1 à 4 caractérisé en ce que les cylindres ou paires de cylindres de compression disposés en aval de la première paire de cylindres de compression et utilisés pour effectuer un étirage sous compression et/ou un post-traitement par compression ultérieur(s) de courte durée sont réglés à une température (mesurée en °C) inférieure d'au moins 5 %, de préférence d'au moins 10 %, à la température de la première paire de cylindres de compression.

6. Procédé suivant les revendications 1 à 5 caractérisé en ce que les vitesses périphériques des cylindres des paires de cylindres utilisées pour l'étirage sous compression et/ou le post-traitement par compression sont égales.

7. Procédé suivant l'une des revendications 1 à 6 caractérisé en ce qu'on utilise pour l'étirage sous compression deux ou plusieurs paires de cylindres dans lesquelles, pour un même entrefer, la charge linéaire exercée sur les plaques, les feuilles, les bandes, les rubans, les profilés ou analogues ou sur les préformes augmente progressivement et on dispose en aval un ou plusieurs autre(s) cylindre(s) de compression du groupe de cylindres de compression qui, pour un même entrefer que celui de la paire de cylindres de compression placée en amont sur le passage pour effectuer l'étirage sous compression, exerce ou exercent une plus faible charge linéaire sur les plaques, feuilles, bandes, rubans et analogues ou sur les préformes, qui passent après avoir été déjà traités par compression.

8. Procédé suivant l'une des revendications 1 à 7 caractérisé en ce que l'entrefer, la vitesse périphérique et la température des cylindres sont réglés de telle manière que, après le passage par l'entrefer de la paire ou des paires de cylindres de compression utilisée(s) pour l'étirage sous compression, la surface de la plaque, de la feuille, de la bande, du profilé, du ruban ou de la préforme soit pourvue d'un mouvement ondulant superficiel ou subisse un rainurage qui peut aussi concerner toute la section et en ce qu'on effectue, au moyen d'au moins une paire de cylindres placés en aval pour un post-traitement par compression, un post-traitement par compression de la pièce en matière thermoplastique en réalisant un lissage superficiel, un striage et/ou un estampage tout en préservant sensiblement l'orientation moléculaire.

9. Procédé suivant l'une des revendications 1 à 8 caractérisé en ce que l'épaisseur de la plaque, de la feuille, de la bande, du ruban, de la pièce formée analogue ou de la préforme soumis à l'étirage sous compression est, avant ledit étirage, de

plus de 2 mm, de préférence de
plus de 2,5 mm.

10. Procédé suivant les revendications 1 à 9 caractérisé en ce que les cylindres et les paires de cylindres utilisés pour l'étirage sous compression et/ou pour le post-traitement par compression ont le même diamètre et la même vitesse périphérique.

11. Dispositif pour l'exécution du procédé suivant l'une des revendications 1 à 10 consistant en un groupe de cylindres de compression comportant plusieurs paires de cylindres dont l'une au moins, à l'intervention de dispositifs mécaniques, hydrauliques, électriques et/ou électromagnétiques supplémentaires, est prévue en tant que paire de cylindres de compression et dont au moins une autre, à l'intervention de dispositifs mécaniques, hydrauliques, électriques et/ou électromagnétiques supplémentaires, est prévue en tant que paire de cylindres de compression et ou paire de cylindres de post-traitement par compression, chacun des cylindres des paires de cylindres mises en œuvre pour l'étirage sous compression et/ou pour le post-traitement par compression étant entraînable directement ou indirectement par un dispositif de commande, le dispositif de l'invention étant caractérisé en ce que tous les cylindres ont le même diamètre, en ce que au moins une paire de cylindres du groupe de cylindres de compression mis en œuvre pour l'étirage sous compression exerce à l'intervention des dispositifs mécaniques, hydrauliques, électriques et/ou électromagnétiques supplémentaires utilisés en même temps une charge linéaire de

100 N/cm à 900 N/cm, de préférence de
150 N/cm à 850 N/cm,

et en ce que au moins une paire de cylindres utilisée pour le post-traitement par compression exerce une charge linéaire de

75 N/cm à 700 N/cm, de préférence de
80 N/cm à 650 N/cm,

sur les plaques, les feuilles, les bandes, les rubans ou analogues ou sur les préformes, la température des cylindres de la deuxième, troisième ou n-ième paire de cylindres utilisée pour l'étirage sous compression et/ou pour le post-traitement par compression étant égale ou inférieure à la température de la première paire de cylindres de compression utilisée pour l'étirage sous compression.

12. Dispositif suivant la revendication 11 caractérisé en ce qu'il comprend en amont de la première paire de cylindres de compression un dispositif de traitement thermique pour le chauffage ou — lorsqu'il s'agit de pièces formées déjà chauffées — pour le refroidissement des plaques, des feuilles, des bandes, des rubans ou analogues ou des préformes, le dispositif de traitement thermique étant réglé pour un domaine de température situé entre 30 °C et une température (mesurée en °C) inférieure d'au moins 30 % à la température au point de fusion des cristallites ou au point de ramollissement du thermoplaste mis en œuvre.